# EUROPEAN PATENT APPLICATION

(11) **EP 3 742 029 A1**
(43) Date of publication of application: **25.11.2020**
(21) Application number: 20179028.4
(22) Date of filing: 13.11.2018
(51) Int. Cl.: F16K 7/04, F16K 31/02, A24F 40/485, A24F 40/10

(54) **FLUID SUPPLY SYSTEM FOR AN ELECTRONIC CIGARETTE**

(30) Priority: 12.12.2017 EP 17206809
(62) Divisional of application: 18799782.0
(71) Applicant: JT International SA, 1202 Geneva (CH)
(72) Inventor: BOSTOCK, George, Cambridge, Cambridgeshire CB1 2FY (GB); ZAK, Dariusz, Bar Hill, Cambridgeshire CB23 8TE (GB); MCDIARMID, Ian, Worthing, BN14 0TN (GB); COOKE, Jon, Cambridge, Cambridgeshire CB1 3AW (GB); ROGAN, Andrew Robert John, Moray, IV36 2HL (GB)
(74) Representative: Gill Jennings & Every LLP

(57) **Abstract**

A consumable for an electronic cigarette (2), the consumable comprising a vaporizing unit, a liquid store and a valve (10), the valve comprising a valve having a first body (12), a second body (18) and a biasing member (34) configured to apply a biasing force (*F_{b}* ) between the first body and the second body. The valve can be operated between an open position and a closed position in response to the relative angular position of the first body in relation to the second body. The valve further comprises an actuator (44), which is configured to create a force ( *Fₐ* ) counteracting against the biasing force ( *F_{b}* ) from the biasing member, wherein the position of the valve is changed when the force from the actuator ( *Fₐ* ) exceeds the biasing force ( *F_{b}* ).

## Description

### Field of invention

The present invention relates to personal vaporizing devices, such as electronic cigarettes. In particular, the invention relates to fluid valve, a fluid supply system and a consumable for an electronic cigarette.

### Background

Electronic cigarettes are an alternative to conventional cigarettes. Instead of generating a combustion smoke, they vaporize a liquid, which can be inhaled by a user. The liquid typically comprises an aerosol-forming substance, such as glycerin or propylene glycol that creates a vapor. Other common substances in the liquid are nicotine and flavorings.

The electronic cigarette is a hand-held electronic cigarette system, comprising a mouthpiece section, a liquid store, a vaporizer or heater unit and a power supply unit. A frequent problem of liquid stores for electronic cigarettes is that they may be sensitive to pressure differences and orientation. As a result, they may leak liquid from the liquid store and a user of the device may become exposed to the liquid.

### Summary

In view of the above-mentioned drawbacks of the prior art, it is an object of the present invention to improve the fluid control in an electronic cigarette.

According to an aspect of the present invention there is provided a fluid supply system for an electronic cigarette comprising:
a fluid transfer element connected to a liquid store and configured to supply liquid to a heating element,
a second body, and
a first body moveable relative to the second body between a first position and a second position, such that when the first body is in the first position, the first body is configured to apply a compression force in order to compress the fluid transfer element relative to the second body and to restrict the liquid flow there through,
and when the first body is in the second position, the first body is released or partially released from the second body such that the liquid flow through the fluid transfer element is increased,
and wherein the first body is operably connected to a biasing member and an actuator, wherein the biasing member is configured to apply a biasing force to bias the first body towards one of the first and the second positions and the actuator is configured to apply an actuating force which acts counter to the biasing force,
whereby the first body is moved from the first position towards the second position, when the force from the actuator exceeds the force of the biasing member.

The present invention is based on a realization that the fluid supply to a heater of an electronic cigarette can be controlled by compressing a fluid transfer element.

According to an exemplary embodiment, the first body comprises a first closing surface and wherein the second body comprises an abutment surface configured as a second closing surface, and wherein the fluid transfer element is compressed between the first closing surface and the second closing surface when the first body is in the first position.

According to an exemplary embodiment, the fluid transfer element comprises a wick. Optionally, the fluid transfer element further comprises a conduit with a flexible outer wall. The enclosing tubular member is preferably a heat resistant and food grade material such as silicon.

According to an exemplary embodiment, the wick has a covered portion located inside the conduit and an exposed portion in contact with a heater. An exposed portion of the wick also enables the wick to be in contact with a heater when covered by an enclosing tubular member. The fluid transfer wick may have different regions of compressibility and capillarity. The wick can be a fibrous element or a sponge-type material.

According to an exemplary embodiment, the actuator is a variable length actuator. In an embodiment, the variable length actuator comprises a shape memory alloy. The variable length actuator can be configured to shorten in length under the influence of heat. In an exemplary embodiment, wherein the variable length actuator is a wire. Alternatively, the variable length actuator can be a metallic rod.

According to an exemplary embodiment, the first body is configured to be linearly moveable thereby to compress the fluid transfer element against the second body. In an embodiment, the second body can be an abutment. The first body can be located in a guiding channel. A guiding channel helps reproducing the same travel path for the first body such that the same level of compression of the fluid transfer element is achieved for each movement of the first body.

According to an exemplary embodiment, the fluid transfer element can be straight. In another embodiment, the fluid transfer element can be L-shaped. The shape of the fluid transfer element can be selected such that the fluidic connection to the heater is enhanced and adapted to the orientation of the heater.

According to an exemplary embodiment, the first body is encircling the fluid transfer element. The first body is positioned in contact with the fluid transfer element.

According to an exemplary embodiment, the biasing member is configured to bias the first body against the fluid transfer element.

In an embodiment, the biasing member and the actuator are positioned on different sides of the closing member. By positioning the biasing member and the actuator on different sides, less risk of interference between the two components is achieved.

According to another exemplary embodiment, the biasing member and the actuator are positioned on the same side of the closing member. By positioning the biasing member and the actuator on the same side, the closing member can be displaced against an abutment.

According to a second aspect of the present invention, it relates to a consumable for an electronic cigarette, the consumable comprising:
a vaporizing unit comprising a fluid transfer element,
a liquid store, and
a valve member in the form of a first body which is moveable relative to a second body between a first position and a second position, such that when the first body is in the first position it is pressing against the fluid transfer element and the second body such that the liquid flow from the liquid store to the vaporizing unit is closed and when the moveable member is in the second position the liquid flow from the liquid store to the vaporizing unit is opened,
wherein the first body is operably connected to a biasing member and an actuator, wherein the biasing member is configured to apply a biasing force to bias the first member towards one of the first and the second positions and the actuator is configured to apply an actuator force which acts counter to the biasing force, whereby the first member is movable from the first position towards the second position when the actuator force exceeds the biasing force.

According to an exemplary embodiment, the first body comprises at least one liquid channel having a liquid inlet and wherein the second body comprises at least one liquid channel from the liquid store to an outlet, and wherein the valve is closed when the liquid inlet of the first body is misaligned with the outlet in the second body.

According to an exemplary embodiment, the wherein the second body is configured to be releasably mounted to the housing of an electronic cigarette.

According to other aspects of the present invention, it relates to a valve for an electronic cigarette. The valve for an electronic cigarette can be integrated into the liquid supply system according to the first aspect of the present invention or to the consumable according to the second aspect of the present invention.

Another aspect of the present invention thus relates to a valve for an electronic cigarette, the valve comprising a first body, a second body and a biasing member configured to apply a biasing force between the first body and the second body,
the first body and the second body being rotatably connected to each other about a rotation axis such that the valve can be operated in an open position and a closed position based on the angular position of the first body in relation to the second body,
wherein the valve further comprises an actuator, which is configured to apply an actuator force which acts counter to the biasing force, wherein the actuator force is applied at a radial distance from the rotation axis, and wherein the valve is changed from closed to open when the actuator force exceeds the biasing force.

In an embodiment, the actuator is a variable length actuator. Alternatively, the actuator can be coupled to a motor and a motion transferring mechanism such as a geared structure.

The variable length actuator may have a first portion connected to the first body and a second portion connected to the second body. An advantage of connecting the variable length actuator to both the first and the second body is that the bodies can be moved in relation to each other.

In an embodiment, the variable length actuator is a wire. The wire provides for a flexible structure that can easily be integrated into the valve. Alternatively, the variable length actuator can be a rod.

The shape memory wire may be straight in its original and relaxed state. Alternatively, the shape memory wire can have a spiral shape in its original and relaxed state. A straight wire is easy to integrate into the valve. On the other hand, a non-straight wire could achieve a larger deformation length.

The valve may have a cylindrical outer surface. The variable length actuator can be arranged to at least partially encircle the outer surface of the valve. A cylindrical outer surface enables the valve to fit into a cylindrical electronic cigarette housing. Additionally, the cylindrical outer surface enables the first and/or the second body to freely rotate inside the electronic cigarette housing.

The variable length actuator may be configured to shorten in length under the influence of heat. The variable length actuator may therefore comprise a shape memory alloy. A shape memory alloy allows the wire to shorten under the influence of heat.

In an embodiment, the valve body has a groove or a channel configured to accommodate the variable length actuator. The groove may preferably be located on the cylindrical outer periphery on the cylindrical outer surface of the valve.

In an embodiment, the radial distance at which the actuator force is applied substantially corresponds to the radius of the valve. The force of the actuator may be applied at radial distance substantially corresponding to the radius of the valve. In an exemplary embodiment, the radial distance is corresponding to 80 to 100% of the valve radius.

In an advantageous embodiment, the biasing member is configured to bias the valve towards the closed position. The biasing member can be a torsion spring. Alternatively, the biasing member can be a leaf-spring or a resilient material. In an embodiment, the biasing member is embedded in the first and the second body. Advantageously the biasing member is configured to bias the valve into closed position.

According to an exemplary embodiment, the electronic cigarette further comprises a housing and wherein the first body is fixedly connected to an internal surface of said housing, and wherein the second body is rotatable in relation to the first body.

According to an exemplary embodiment, an aperture of variable size is created through the first body and the second body, wherein the aperture is at its maximum size when the valve is in its opened position and its minimal size when the valve is in its closed position.

According to an exemplary embodiment, the first body comprises a first closing surface and the second body comprises a second closing surface, wherein the variable length actuator is configured to change a distance between the first closing surface and the second closing surface.

According to a further aspect of the present invention, it relates to a fluid supply system for an electronic cigarette comprising the valve according to any one of the preceding embodiments, and wherein the fluid supply system further comprises a fluid supply conduit configured to transport fluid from a liquid store. The valve can be configured to pinch and release the fluid supply conduit in response to the angular position between the first valve body and the second valve body, such that the flow rate of liquid from the liquid store can be regulated.

According to an exemplary embodiment, the fluid supply system for an electronic cigarette comprises the valve according to the third aspect of the invention. The fluid supply system further comprises a flexible liquid store contained within a container, wherein the valve is configured to regulate the air supply into the housing such that when the valve is opened, air can enter the housing and liquid from the flexible liquid store can be expelled.

According to another aspect of the present invention, it relates to a consumable for an electronic cigarette, the consumable comprising:
a vaporizing unit,
a liquid store, and
a valve member in the form of a first body which is moveable relative to a second body between a first position and a second position, such that when the first body is in the first position the first body is sealed against the second body such that the liquid flow from the liquid store to the vaporizing unit is closed and when the moveable member is in the second position the liquid flow from the liquid store to the vaporizing unit is opened,
wherein the first body is operably connected to a biasing member and an actuator, wherein the biasing member is configured to apply a biasing force to bias the first member towards one of the first and the second positions and the actuator is configured to apply an actuator force which acts counter to the biasing force, whereby the first member is movable from the first position towards the second position when the actuator force exceeds the biasing force.

In an embodiment, first body is configured as a cylindrical member configured to be rotated around an axis and is located within the liquid store.

The first body can be removably connected to a rotor and wherein the rotor is operatively connected to the actuator and the biasing member. The rotor and the first body may also comprise corresponding engagement structures. Furthermore, the consumable may be configured to only be connected and disconnected from the rotor when the valve is in the closed position.

In an embodiment, the first body comprises at least one liquid channel having a liquid inlet and wherein the second body comprises at least one liquid channel from the liquid store to an outlet, and wherein the valve is closed when the liquid inlet of the first body is misaligned with the outlet in the second body.

### Brief description of the drawings

The invention will now be described with reference to the appended drawings, which by way of example illustrate embodiments of the present invention and in which like features are denoted with the same reference numerals.
Fig. 1a is a schematic view of an electronic cigarette according to an exemplary embodiment of the present invention;
Fig. 1b is a schematic cross-sectional view of an electronic cigarette according to an exemplary embodiment of the present invention;
Fig. 2 is a schematic view a fluid supply system according to an embodiment of the present invention;
Fig. 3 is a schematic view a fluid supply system according to another embodiment of the present invention;
Figs. 4a is a schematic perspective view of a valve according to an embodiment of the present invention;
Figs. 4b and 4c are exploded views of a valve according to an embodiment of the present invention;
Figs. 5a and 5b are schematic top-views of a valve according to an embodiment of the present invention in a closed position and an open position, respectively;
Fig. 6a is a schematic perspective view of a valve in connection with the fluid supply system in of fig. 3.
Fig. 6b is a schematic perspective view of the fluid supply system of fig. 6a with the valve in an open position;
Figs 7a to 7d are schematic illustrations of a fluid supply system according to another embodiment of the present invention;
Fig. 7e is a schematic illustration of a fluid supply system according to the embodiment of figs 7a to 7d when arranged inside an electronic cigarette;
Figs. 8a to 8d are schematic cross-sectional views of a liquid supply system of other exemplary embodiments of the present invention and wherein the valve is linearly operated;
Fig. 9 is a schematic cross-sectional view of a consumable for an electronic cigarette comprising a rotary valve according to an embodiment of the present invention;
Figs. 10a and 10b is a schematic cross-sectional view of a consumable for an electronic cigarette according to another exemplary embodiment of the present invention. Figure 10a illustrates the the valve is in a closed position and figure 10b shows the valve in an open position;
Fig. 10c is a schematic top view of the first and second body of the valve in figures 10a and 10b; and
Fig. 11 is a schematic cross-sectional view of a consumable for an electronic cigarette comprising a rotary valve according to an embodiment of the present invention, and in which the valve is configured to pinch against a fluid conduit.

### Detailed description

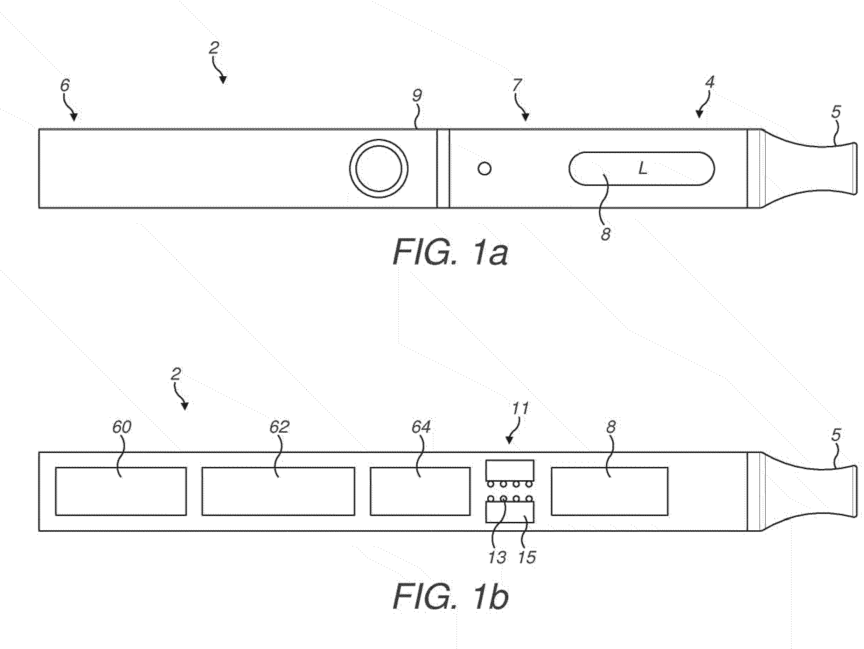

Referring to the drawings and in particular to figures 1a and 1b, an electronic cigarette 2 for vaporizing a liquid L is illustrated. The electronic cigarette 2 comprises a mouthpiece section 4 and a power supply section 6. The electronic cigarette 2 can be used as a substitute for a conventional cigarette.

The mouthpiece section 4 comprises a mouthpiece 5 and preferably also a liquid storage portion 7. However, the liquid storage portion 7 can also be arranged in the power supply section 6. The liquid storage portion 7 may be a cavity configured to receive a liquid store 8 in the form of a disposable capsule 8 containing the liquid L to be vaporized. Alternatively, the liquid storage portion 7 may comprise a refillable reservoir 8, which can be refilled by an external device such as a liquid refill bottle. The latter example would thus refer to a so called "open tank" system.

The electronic cigarette 2 is configured to produce a vapor from the liquid L to be vaporized. The liquid *L* may comprise an aerosol-forming substance such as propylene glycol or glycerol and may contain other substances such as nicotine. The liquid *L* may also comprise flavorings such as e.g. tobacco, menthol or fruit flavor.

The power supply section 6 comprises a power unit 60, which may for instance be a rechargeable lithium battery or any other suitable power unit. The power supply section 6 further comprises a control unit 62 configured to control the operation of the device based on manual user input or automatic input from one or several sensors 64. The control unit 62 is configured to receive and process manual input data and sensor data in order to activate a heater and the overall operation of the electronic cigarette 2. The power supply section 6 may advantageously comprise at least one sensor 64, such as a flow sensor 64 configured to sense an air flow through the electronic cigarette 2 which occurs when a user inhales from the mouthpiece 5. Other suitable sensors may include temperature sensors and sensors configured to detect depletion of the liquid store 8.

The electronic cigarette 2 comprises a vaporizing unit 11 configured to vaporize liquid L from the liquid store 8. The vaporizing unit 11 comprises a heating element 13 and a fluid transfer element 15. The fluid transfer element 15 is configured to transfer liquid L by capillary action from the liquid store 8 to the heating element 13. The fluid transfer element 15 can be a fibrous or porous element such as a wick made from twined cotton or silica. Alternatively, the fluid transfer element 15 can be a porous element. The heating element 13 is not restricted to a particular type and can be a horizontal or vertical coil or a flat heating element. Moreover, the vaporizing unit 11 is not limited to use heat, but may for instance comprise a vibrating transducer element instead of a heater.

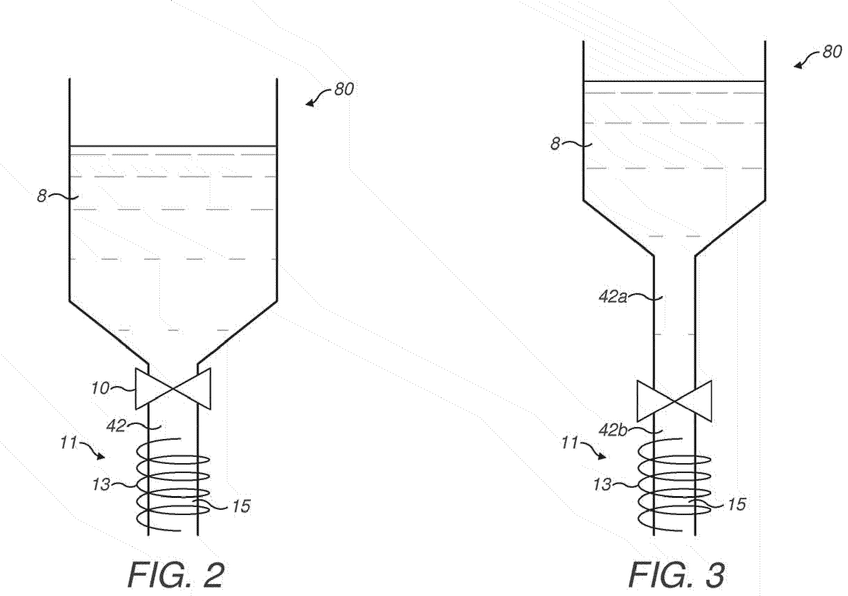

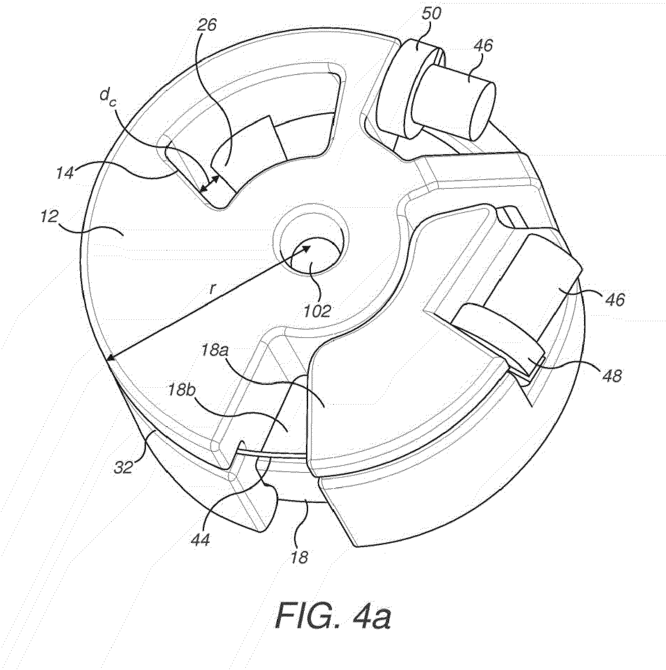

As best seen in figures 2 and 3, the electronic cigarette 2 of the present invention has a fluid supply system 80 comprising the liquid store 8 and a valve 10. The valve 10 is configured to regulate the fluid supply from the liquid store 8 to the vaporizing unit 11. As schematically illustrated in figure 2, the valve 10 can be arranged at the outlet of the liquid store 8 and configured such that liquid L flows through a variable size orifice in the valve 10. The larger the orifice, the higher the flow rate is there through, as will be further described in connection with figure 4a. The valve 10 may comprise closing surfaces in the form of a first closing surface 14 and a second closing surface 26, which in a closed position are configured to provide a sealed surface to restrict or close off the fluid flow from the liquid store 8 to the vaporizing unit 11.

In order to establish a fluidic connection with the fluid transfer element 15, the fluid supply system 80 may comprise a fluid supply conduit 42 arranged downstream of the valve 10. The fluid transfer element 15 may be partially located inside the fluid supply conduit 42, or be in physical contact with an outlet of the fluid supply conduit 42.

The fluid supply system 80 in figure 3 is similar to the fluid supply system 80 of figure 2, but comprises an upper fluid conduit portion 42a and a lower fluid supply conduit portion 42b arranged on each side of the valve 10. The upper fluid supply conduit portion 42a and the lower fluid supply conduit portion 42b are provided as a single and continuous fluid supply conduit 42.

In this embodiment, the valve 10 is indirectly regulating the fluid supply from the liquid store 8 to the vaporizing unit 11 by restricting the flow of fluid through the fluid supply conduit 42. The valve 10 is thus configured to compress the fluid supply conduit 42 such that the liquid supply is regulated. The valve 10 can completely close the fluid supply or restrict the flow. The fluid supply conduit 42 may be a flexible tubular member. The fluid supply conduit 42 is preferably made from a suitable food grade material, such as silicon, PVC, PU and LLDPE. The fluid supply conduit 42 provides a clean closing surface as the fluid is not in direct contact with moveable parts in the valve 10.

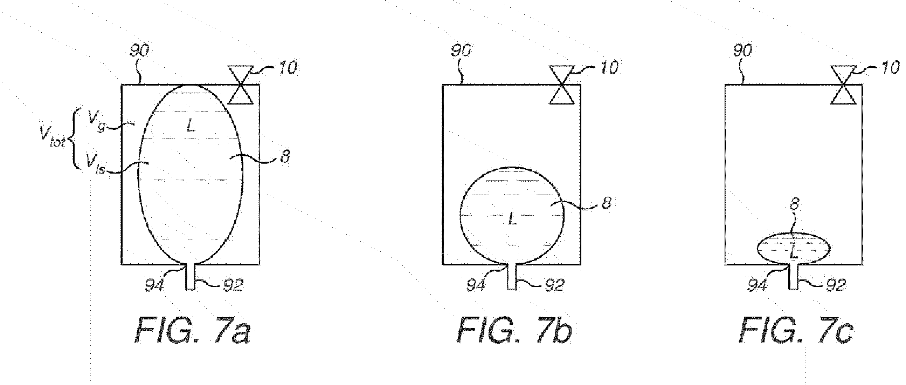

In an alternative embodiment depicted in figures 7a to 7e, the valve 10 is configured to indirectly regulate the fluid supply from the liquid store 8. The liquid store 8 may be flexible and housed within a rigid container 90. The liquid store 8 is provided with an outlet 92, which coincides with an opening 94 in the rigid container 90. The opening 94 of the rigid container 90 is hermetically sealed against the outlet 92 of the flexible liquid store 8. In use, the rigid container 90 has an inner volume *Vₜₒₜ* that is occupied by the volume *Vₗₛ* of the liquid store 8 and a volume of an enclosing gas V_{g} The enclosing gas may for instance be air. In the electronic cigarette 2, the liquid store 8 may be arranged with the outlet coinciding with the longitudinal direction of the electronic cigarette 2.

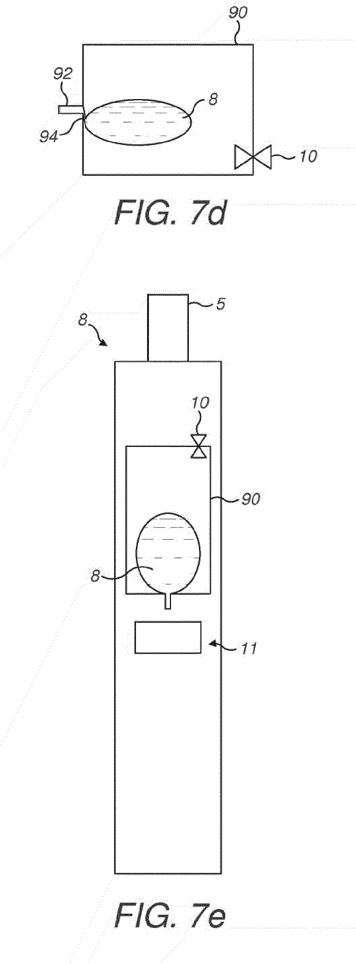

As seen in figure 7e, when the electronic cigarette 2 is in a vertical position (i.e. when the longitudinal direction of the electronic cigarette 2 coincides with the vertical direction) and when the valve 10 is closed, the fluid supply from the liquid store 8 is closed. This is due to the effect that the closed valve blocks air from entering into the rigid container 90 and to compensate for liquid flowing out of the liquid store 8.

As the valve 10 is opened, air can enter into the rigid container 90 while the liquid L is able to flow out from the liquid store 8 due to the gravitational force and the tension in the flexible liquid store 8. As seen in figure 7d, the liquid store 8 may deform depending on the position of the electronic cigarette 2 in response to the gravitational force acting upon the liquid store 8. The deformation closes the outlet 92 from the liquid store whereby the flow of liquid from the liquid store 8 is reduced or closed. This creates a leakage protection in the electronic cigarette 2 when it is in an inoperative position. The orientation of the liquid store 8 inside the electronic cigarette 2 may be varied depending on what position is defined as the operating position. In the present example, a horizontal position of the electronic cigarette 2 would be an inoperative position as the electronic cigarette 2 in such a position would typically be laying on a surface (e.g. on a table).

Now referring to figures 4a to 4c, 5a, 5b, 6a and 6b, which illustrate details of the components of the valve 10 according to an embodiment of the invention. The valve 10 comprises a first body 12 and a second body 18. The first body 12 and the second body 18 are rotatably connected to each other. The rotatable connection between the first body 12 and the second body 18 may be achieved by a joint 101 such as a pin 101 extending through an aperture 102 in the center axis 38. The first body 12 comprises a first closing surface 14 and the second body 18 comprises a second closing surface 26. The distance *d_{c}* between the first closing surface 14 and the second closing surface 26 can be varied in response to the relative angular position between the first body 12 and the second body 18.

As seen in the figures, the second body 18 can be composed from a first part 18a and a second part 18b. Alternatively, the second body 18 can be an integral piece. The first body 12 and the second body 18 are configured to be moved in relation to each other. This has the effect of changing the relative angular position between the first body 12 and the second body 18. As the first body 12 and the second body 18 are provided with a first closing surface 14 and a second closing surface 26, respectively, the distance *d_{c}* between the closing surfaces 14, 26 will also change.

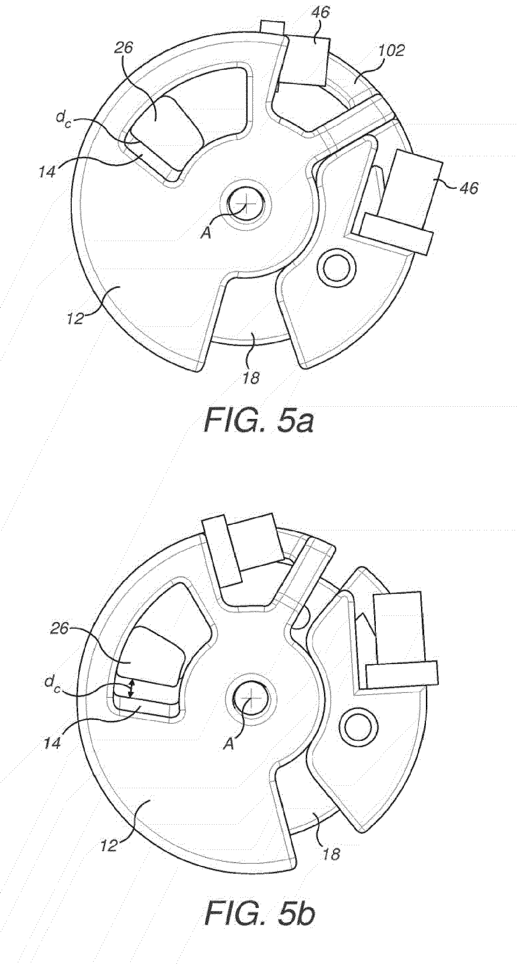

Figure 5a illustrates the valve 10 in a closed position and figure 5b illustrates the valve 10 in an open position. When the valve 10 is in a closed position, the distance *d_{c}* between the first closing surface 14 and the second closing surface 26 is at its minimum *dₘᵢₙ.* The minimum distance *dₘᵢₙ* can be a positive distance, such as a few millimeters or completely closed, whereby the distance *dₘᵢₙ* is null. In the embodiment suitable for use in the fluid supply system of fig 2, the first closing surface 14 and the second closing surface 26 are in contact with each other and the distance is thus null. In the embodiment of fig. 3 where the valve 10 is indirectly acting upon a fluid supply conduit 42, the distance *dₘᵢₙ* is approximately corresponding to the double wall thickness of the fluid supply conduit. In the closed position, the fluid supply conduit 42 is completely sealed off.

When the valve 10 is in an open position, the first closing surface 14 and the second closing surface 26 are arranged at a distance from each other such that an aperture is created through the valve 10. The open distance *dₒₚₑₙ* between the first closing surface 14 and the second closing surface 26 can be varied in the open position, such that the fluid supply to the vaporizing unit 11 can be varied. This may be advantageous in order to respond to the user's inhalation pattern and to better respond to different demand rates of vapor.

In advantageous an embodiment, the second body 18 may be fixedly connected to the inner portion of the housing 3 of the electronic cigarette 2, and the first body 12 is arranged to be freely rotatable in relation to the second body 18.

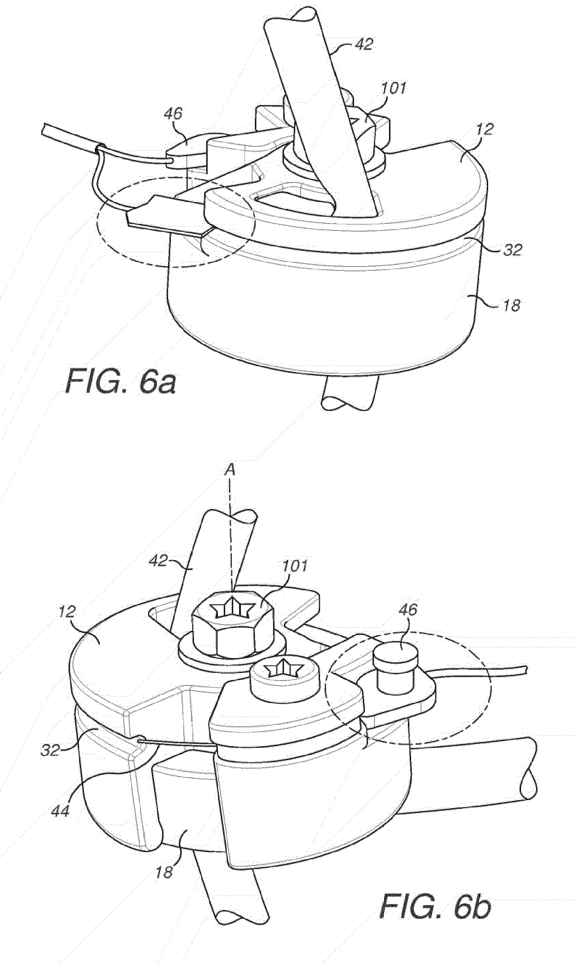

Figures 6a and 6b, illustrate an embodiment of the valve 10 in connection with the fluid supply system 80 of figure 3. In figures 6a and 6b, the fluid supply conduit 42 is compressed in response to the variable distance between the first closing surface 14 and the second closing surface 26. Figure 6a illustrates the valve 10 in a closed position and figure 6b illustrates the valve 10 in an open position.

The first body 12 and the second body 18 are preferably circular. The circular shape enables the valve 10 to correspond to the internal shape of the housing 3 of a cylindrical electronic cigarette 2 and to provide a snug fit therein and freely rotate therein.

The valve 10 is operated by an actuator 44, which is configured to displace the first body 12 in relation to the second body 18. The actuator 44 can be an electro-mechanical arrangement configured to displace the first body 12. The actuator 44 can be configured to change length under the influence of heat.

In a preferred embodiment, the actuator 44 comprises a shape memory wire comprising a shape-memory alloy. The shape memory wire 44 is configured to move the first body 12 in relation to the second body 18. Specifically, the shape memory wire 44 is configured to rotate the first body 12 in relation to the second body 18 in order to change the angular position of the first body 12 in relation to the second body 18. The shape memory wire 44 can be an alloy formed by copper-aluminum-nickel, nickel-titanium (NiTi), or other alloys comprising zinc, copper, gold and iron Examples of suitable alloys are Ni-Ti, Ni-Ti-Au, Ni-Ti-Cr, Ni-Ti-Cu, Ni-Ti-Fe, Ni-Ti-Hf, Ni-Ti-Pd, Ni-Ti-Pt, Ni-Ti-Zr. Other suitable alloys can include Ag-Cd, Au-Cd, Co-AI, Co-Ni-AI, Cu-AI-Ni, Cu-AI-Nb, Cu-Sn, Cu-Zn, Cu-Zn-AI, Cu-Zn-Si, Cu-Zn-Sn, Fe-Mn-Si, Fe-Pt, In-Ti, Mn-Cu, Nb-Ru, Ni-AI, Ni-Mn, Ni-Mn-Ga,Ta-Ru, Ti-Au, Ti-Nb, Ti-Pd, Ti-Pt-Ir, U-Nb, Zr-Cu.

Shape memory alloys (SMAs) exist in two distinct crystal structures (martensite and austenite). The displayed crystal structure is determined by temperature. When electrical energy (heat) is supplied to the SMA a phase change takes place from martensite to austensite. In the austensite phase the shape memory alloy remembers the shape it was in before it was deformed. This phase change gives rise to a force *Fₐ* as the shape memory alloy goes back to its undeformed shape.

The shape memory wire 44 is capable of shortening in length when exposed to heat. In its unheated state, the shape memory wire 44 has an unheated length *lₘₐₓ and* in a heated state it has a heated length *lₘᵢₙ.* The deformation length difference *Δl of the* shape memory wire 44 corresponds to *lₘₐₓ* - *lₘᵢₙ.* When the electronic cigarette 2 is not in use, the shape memory wire 44 has its longest length *lₘₐₓ* as the biasing member 34 is urging the first closing surface 14 against the second closing surface 26.

The force *F*ₐ is acting as an opening force to operate the valve 10. The force *F*ₐ is proportional to the cross sectional area (gauge) of the wire and the length of deformation. The difference in length of the wire between the two crystal structures rotates the first body portion in relation to the second body portion and thus opens the valve.

The shape memory wire 44 may be housed in a groove 32. The groove 32 guides the wire and provides a smooth surface at a constant radius so that the movements of the wire are facilitated. The groove may be provided with a metallic coating. The metallic coating is heat resistant and provides for a low friction between the shape memory wire 44 and the groove 32. The shape-memory wire 44 is configured to move the first body 12 and the second body 18 in relation to each other in order to actuate the valve 10.

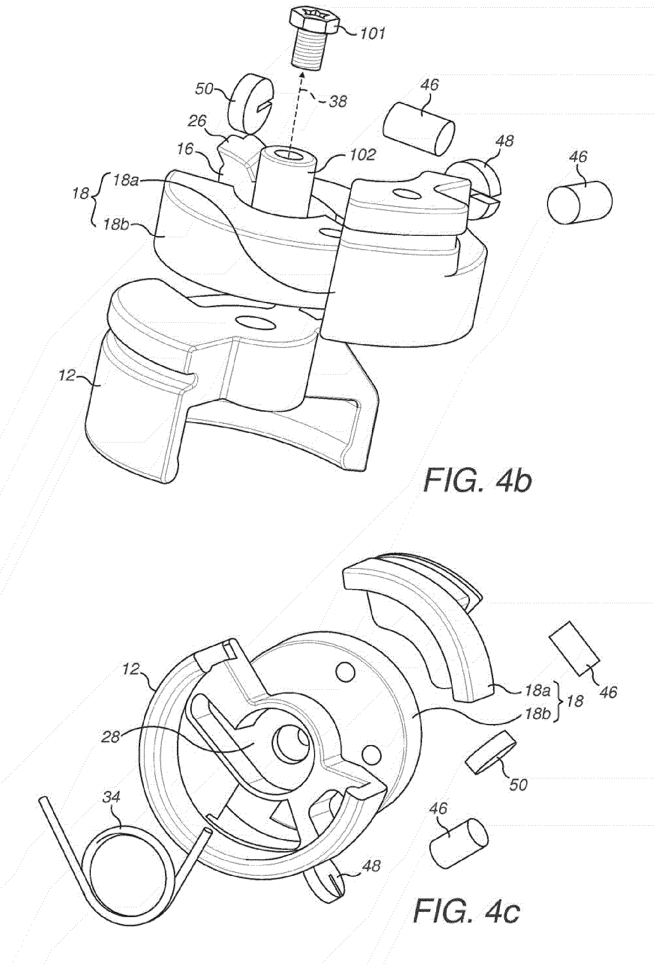

The valve 10 comprises a biasing member 34 configured to bias the valve 10 into a closed position. As best seen in figure 4c, the biasing member 34 is arranged in-between the first body 12 and the second body 18. The first body 12 and the second body 18 are therefore operationally connected to each other via the biasing member 34.

The variable length actuator 44 is configured to create a force *Fₐ* counter-acting against the biasing force *F_{b}* from the biasing member 34. The force of the actuator *Fₐ* is applied at a radial distance *dᵣ* from the rotation axis. The radial distance *dᵣ* corresponds to the radial position of the wire 44 in the groove 32 in relation to the center axis A. The radial distance *dᵣ* gives rise to a lever for creating a higher torque together with the actuator force *Fₐ*. The valve 10 is opened when the force from the actuator *Fₐ* exceeds the biasing force *F_{b}*. When the heat is no longer applied to the variable length actuator, the force from the biasing member *F_{b}* exceeds the force in the variable length actuator *Fₐ*, whereby the force from the biasing member *F_{b}* deforms the variable length actuator to its maximal length *lₘₐₓ* closes the valve 10.

The biasing member 34 provides for a reciprocating motion between the closed position and the open position. As seen in figure 4c, the biasing member 34 may for instance be a torsion spring 34. As seen in figures 4b and 4c, the biasing member 34 can be embedded in a first and second cut-out 16, 28 of the first body 12 and the second body 18 respectively. When the valve 11 is opened, the force *Fₐ* in the shape memory wire 44 is overcoming the biasing force *F_{b}* and the internal frictional losses of the valve 10.

The shape memory wire 44 may be activated by an electrical supply wire 46. The electrical supply wire 46 is resistive and acts as a heater when electrical energy passes through it. The electrical supply wire 46 is connected to the power supply unit 60 and configured to transform energy from the power supply unit 60 to heat the shape memory wire 44. Typical and suitable heating wires may for instance comprise copper. However, in an alternative embodiment (not illustrated), the electrical supply wire 46 may be excluded and the shape memory wire 44 may be arranged in the electronic cigarette 2 in direct proximity to the heater. Arranging the shape-memory wire 44 in proximity to the heater can enable the residual heat from the heater to be used for activating the memory wire 44.

The shape memory wire 44 is fixedly connected to the first body 12 and the second body 18. As seen in figure 4a, a first connection point 48 and a second connection point 50 are preferably located such that the shape memory wire 44 extends along a long distance. The shape memory wire 44 is therefore preferably encircling or partially encircling the valve 10. This enables a longer deformation length distance *Δl* and a higher opening force *F*ₐ of the valve 10. The first and the second connection points 48, 50 may be in the form of wire brackets.

The shape memory wire 44 is fixedly connected to the first body 12 in a first connection point 48 and to the second body 14 in a second connection point 50. The first connection point and the second connection points are preferably provided with a first wire bracket 48 and a second wire bracket 50. The first wire bracket 48 and a second wire bracket 50 provide strong connections and are facilitating the assembly of the valve 10. The first wire bracket 48 and a second wire bracket 50 may also be the connection point joining the shape memory wire 44 to the electrical supply wire 46.

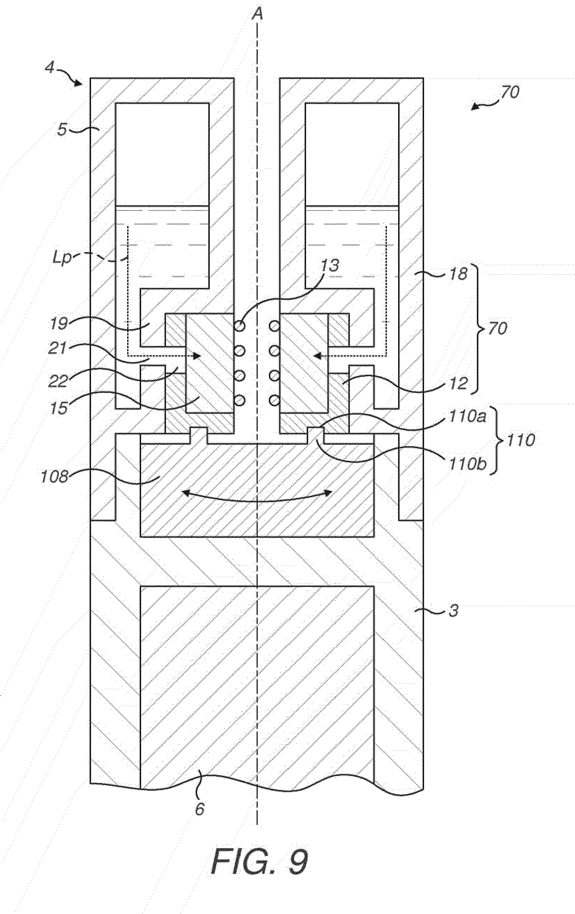

Figure 9 illustrates another exemplary embodiment of a valve 10 for an electronic cigarette 2. The valve 10 comprises a first body 12 and a second body 18. The first body 12 may be configured as a cylindrical member and can be located within the second body 18 which comprises the liquid store 8. The first body 12 is rotatable in relation to the second body 18 around an axis A. The first body 12 is thus concentrically arranged within the second body 18.

The second body 18 is configured to be fixedly mounted to the housing 3 of the electronic cigarette 2. In the illustrated embodiment, the second body 18 is an integral part of a housing 19 of the liquid store 8. The second body 18 can be connected to the housing 3 of the electronic cigarette 2, by for instance a threaded connection, a magnetic coupling, a bayonet coupling or a snap lock connection. The second body 18 comprises at least liquid channel 21 having a fluid outlet from the liquid store 8. The second body 18 can be provided with several outlets 21 in order to distribute the liquid in the fluid transfer element 15.

The first body 12 comprises a liquid channel 22, which is in fluidic connection with the fluid transfer element 15. When the liquid channel 21 of the second body 18 is aligned with the liquid channel 22 in the first body 12, liquid can flow from the liquid store 8 to the fluid transfer element 15.

As the second body 18 is further rotated, the valve 10 is brought into a closed position, wherein the liquid channel 21 of the second body 18 is misaligned with the liquid channel 22 in the first body 12. The outlet from the liquid store 8 is then closed off against a surface of the first body 12. The first closing surface 14 is the cylindrical surface area of the first body 12 and the second closing surface 26 is the cylindrical surface areas of the second body 18.

A sealing between the first closing surface 14 and the second closing surface 26 can be achieved by an interference fit between the first body 12 and the second body 18. Alternatively, a sealing surface can be provided on the second body, e.g. made from an elastomeric material such as rubber.

The first body 12 is operationally coupled to a rotor 108. The rotor 108 can be a cylindrical part configured to be retained within a cylindrical housing of the electronic cigarette 2 and rotate around the axis A. The rotor 108 is preferably releasably coupled to the first body 12. The releasable coupling between the rotor 108 and the first body 12 can be achieved by an interconnectable and disconnectable engagement structure 110, such as interconnecting splines or splines and apertures connection. Other possible examples of disconnectable engagement structure 110 may include castellations or friction surfaces.

Advantageously, the engagement structure 110a on the consumable 70 is only interconnectable with the engagement structure 110b on the rotor 108 only when the valve is in a closed position and hence, when the channels in the first body are misaligned with the openings from the liquid store 8. This can be achieved by a locking element (not illustrated), such as e.g. a catch, which is engaged when the valve 10 is in an open position and which is configured to disengage when the valve 10 is in a closed position.

The rotor 108 is connected and configured to be operated by an actuator 44 similar to the previously described embodiments. The actuator 44 can be a shape memory wire 44 is fixedly connected to the rotor 108 in a first connection point 48 and a second connection point 50 connected to the housing of the electronic cigarette 2. This enables the actuator to rotate the rotor as the shape memory wire is heated and shortens in length.

In order to achieve a reciprocating motion of the rotor 108 is operatively connected to a biasing member 34 (not shown). The biasing member 34 is configured to bias the rotor 108 into as closed position. The biasing member 34 can be a torsion spring 34 operatively connected to and preferably embedded in the rotor 108. The position of the moveable first body 12 is changed when the force from the actuator 44 exceeds the force *F_{b}* of the biasing member 34, or when the force *F_{b}* from the biasing member 34 exceeds the force of the actuator 44.

As seen in figure 9, the first body 12 can be combined with the second body 18 (containing the liquid store 8) and the vaporizing unit 11 and thus configured as a disposable consumable 70. The vaporizing unit 11 comprises the fluid transfer element 15 and the heating element 13. The consumable 70 may comprise a mouthpiece portion 5. As the actuator 44 is part of the power supply section 6, it can be reused.

The fluid transfer element 15 can be housed within the first body 12. The heating element 13 can be located in a center portion of the first body 12 and encircled by the fluid transfer element 15. The fluid transfer element 15 may have a tubular shape and be configured to house the heating element 13 in the hollow space defined therein.

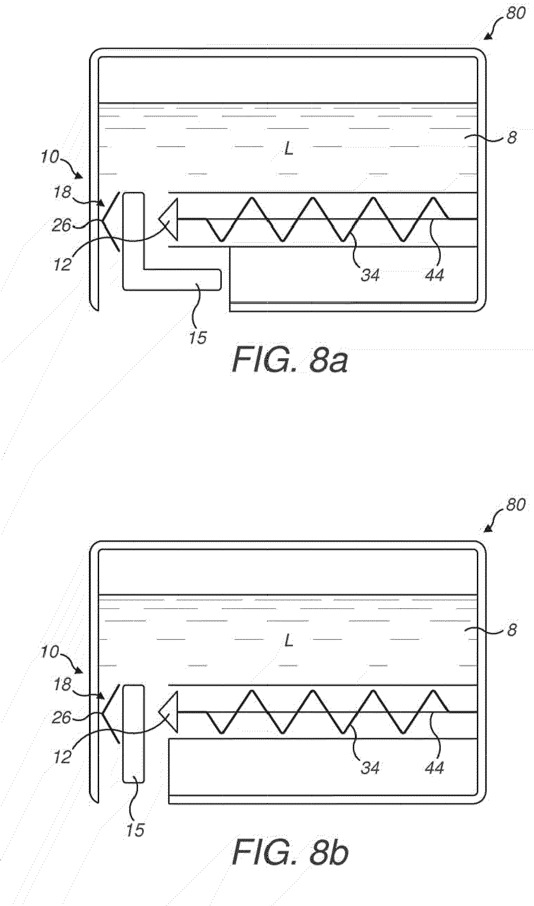

Now referring to figures 8a to 8c, which illustrate a further embodiment of a fluid supply system 80 according to the present invention. Similar to the previously described embodiments, a first body 12 is moveable between a first position and a second position. In the illustrated example, the first position can be a position in which the valve 10 is opened and the second position can be a position in which the valve 10 is closed.

The first body 12 can be configured as a movable closing member 12 and can be operated by an actuator 44 configured as in the previously described embodiments. However, the embodiment of figures 8a to 8c differs from the previously described embodiments in that the actuator 44 can be configured to provide a linear displacement of the first body 12. The actuator 44 can also comprise a shape memory wire 44 and be connected to a resistive heating wire 46 as described in connection with the previous embodiments.

The fluid supply system 80 comprises a liquid store 8, a fluid transfer element 15 and a valve 10. The valve 10 has a first body 12 having a first closing surface 14 and second body 18 having a second closing surface 26. The second closing surface 26 can be in the form of an abutment 26. The fluid transfer element 15 is connected to a liquid store 8 and is configured to supply liquid to a heating element 13.

The first body 12 and the second body 18 are configured to operate as a valve 10. When the first body 12 is in a first position, the first body 12 member is configured to apply a force onto the fluid transfer element 15 in order to compress the fluid transfer element 15 against the second closing surface 26 (abutment) and to restrict the liquid flow there through. When the moveable first body 12 is in a second position, the moveable first body 12 is released or partially released from the second closing surface 26 such that the liquid flow through the fluid transfer element 15 is increased.

The first body 12 can be guided in a slot in order to assure a reproductive travel path. The slot can be provided with a low friction surface in for instance metal. The shape of the moveable first body 12 is selected to provide a low friction against the slot.

In order to achieve a reciprocating motion of the first body 12, the first body 12 is operably connected to a biasing member 34 and an actuator 44. The biasing member 34 is configured to bias the moveable first body 12 into one of the first and the second positions and the actuator 44 is configured to apply a counter-acting force *F_{b}* to the actuator 44. The position of the moveable first body 12 is changed when the force from the actuator 44 exceeds the force *F_{b}* of the biasing member 34, or when the force *F_{b}* from the biasing member 34 exceeds the force *Fₐ* of the actuator 44.

The moveable first body 12 is configured to compress the fluid transfer element 15. The moveable first body 12 is configured to apply a force *Fₐ* in a transverse direction in relation to the axial length of the fluid transfer element. The fluid transfer element 15 may be of a compressible material such as a fibrous or a spongy material. By compressing the capillaries in the fluid transfer element 15, the liquid flow in the fluid transfer element 15 can be closed off even if the fluid transfer element 15 is in fluidic contact with the liquid store 8. An advantage is that the fluid transfer element 15 is in direct contact with the liquid in the liquid store 8 whereby a rapid saturation of the fluid transfer element 15 is achieved when the valve 10 is opened.

The biasing member 34 is configured to bias the moveable first body 12 into a closed position, while the actuator 44 is configured to create an opening force *Fₐ* once heat is applied to the shape memory wire 44.

In the embodiment of figures 8a and 8b, the first body 12 can be configured to press against the fluid transfer element 15.

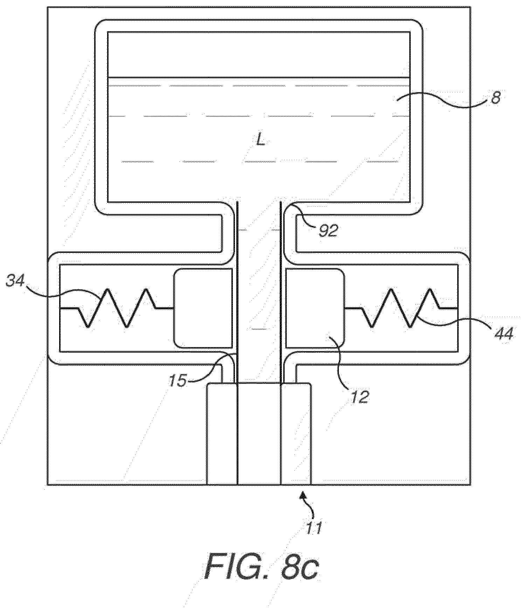

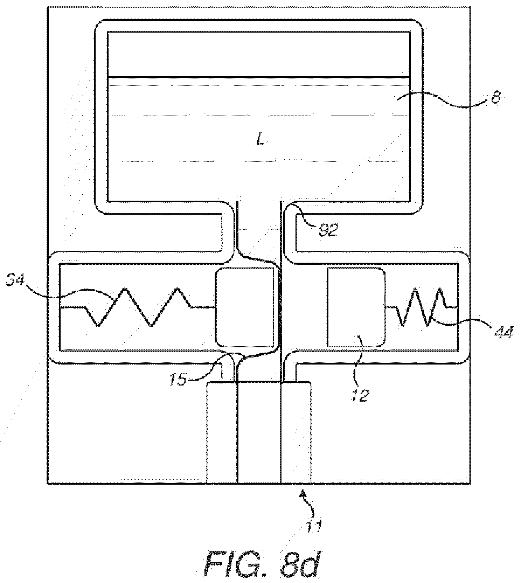

Alternatively, as seen in figure 8c and 8d, the first body 12 can be encircling the fluid transfer element 15. The first body 12 comprises an aperture through which the fluid transfer element extends. The biasing member 34 and the actuator 44 can be positioned on different sides of the moveable first body 12. However, it is also possible that the biasing member 34 and the actuator 44 are arranged on the same side of the first body 12.

When the actuator 44 is no longer exposed to heat, the force *F_{b}* of the biasing member 34 exceeds the force of the actuator *Fₐ* such that the first body is moved. Due to the compression of the fluid transfer element 15, the flow of liquid through the fluid transfer element 15 is modified.
The first body 12 is moved such that it is misaligned with the outlet 92 liquid store, whereby the fluid transfer element 15 is compressed between the first body 12 and the outlet 92.

In order to further control the fluid flow through the fluid transfer element 15, the fluid transfer element 15 may have different regions of compressibility and capillarity.

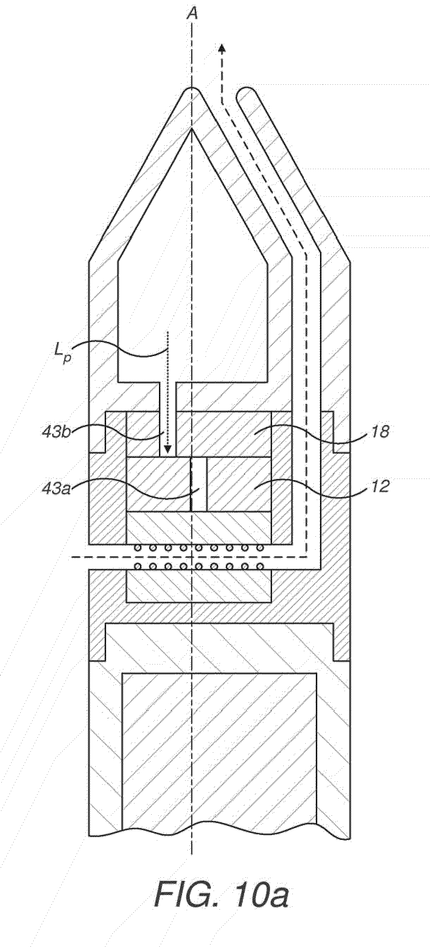

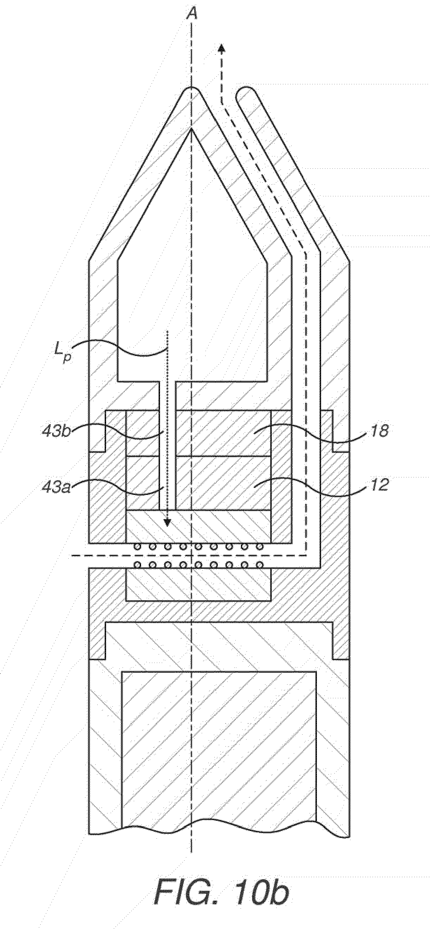

Figure 10a to 10c illustrate another embodiment of the present invention. This embodiment is functionally similar to the embodiment illustrated in figure 9 in that a valve 10 comprises a first body 12 and a second body 18 and wherein the first body 12 is rotatable in relation to the second body 18 around an axis A. The first body 12 may be configured as a cylindrical member and can be located within the liquid store 8. In this embodiment, the second body is configured as a fixed stationary part, which is preferably cylindrical.

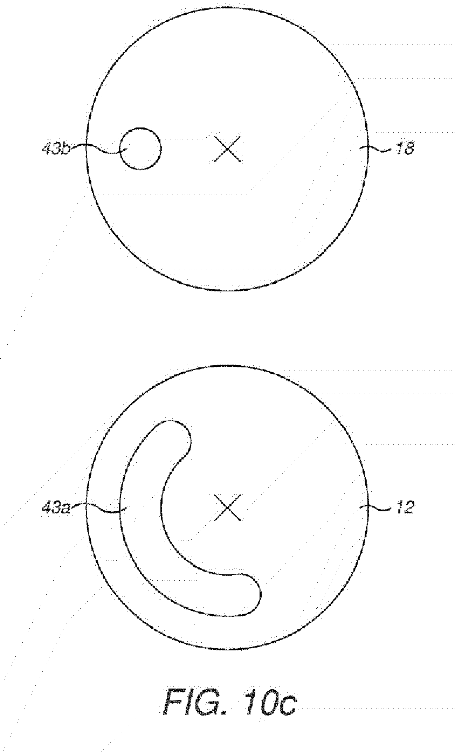

The first body 12 comprises a first liquid channel 43a and the second body 18 comprises a second liquid channel 43b. The valve is in an open position when the openings first liquid channel 43a and the second liquid channel 43b are aligned with each other. As illustrated in figure 10c, the first liquid channel can be configured as an elongate slot in order to enable the valve 10 to be open and closed over an extended angular distance. When the openings 43a, 43b are misaligned, the valve 10 is closed. The channels are eccentrically positioned on the first body 12 and the second body 18.

The first body 12 is connected to and configured to be operated by an actuator 44 and biasing member 34 similar to the previously described embodiments.

The actuator 44 can be a shape memory wire 44 is fixedly connected to first body 12 in a first connection point 48 and a second connection point 50 connected to the housing of the electronic cigarette. This enables the actuator 44 to rotate the first body 12 as the shape memory wire 44 is heated and shortens in length. Alternatively, the operation of the first body 12 of the valve 10 can be achieved by a linear displacement as illustrated in figure 8c.

In order to achieve a reciprocating motion, the first body 12 is operatively connected to a biasing member 34. The biasing member 34 is configured to bias the first body 12 into as closed position and to provide for a reciprocating motion between the open and closed position.

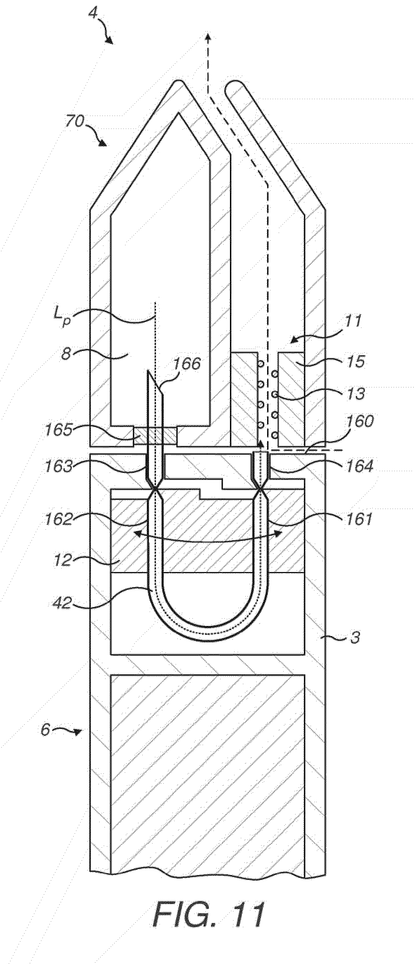

Figure 11 illustrates another exemplary embodiment of the present invention. The electronic cigarette 2 comprises a mouthpiece section 4 having a liquid store 8 and a vaporizer unit 11. The liquid store 8 and the vaporization chamber are located laterally, i.e. side-by-side, whereby liquid is transferred laterally from the liquid store 8 to the vaporizing unit 11. The mouthpiece section 6 is in contact with the power supply section 6 via an engagement surface 160.

A fluid supply conduit 42 is configured to connect the liquid store 8 to the vaporizing unit 11. A first body 12 is located inside the housing of the electronic cigarette 2. The first body 12 can be located in a reusable portion of the electronic cigarette 2. The first body 12 can be located inside the housing of the power supply section 6. The first body 12 comprises a first aperture 161 and a second aperture 162 through which the fluid supply conduit 42 is conducted. The engagement surface 160 on the housing 3 of is provided with two corresponding apertures 163, 164. When the apertures of the engagement surface 163, 164 are aligned with the apertures 161, 162 in the first body 12, the fluid supply conduit 42 is in an uncompressed state. As the relative angular position is changed between the first body 12 and the apertures 163, 164, the apertures 163, 164 of the engagement surface 160 become misaligned with the apertures 161, 162 in the first body 12, whereby the fluid supply conduit 42 is compressed in-between the engagement surface 160 and the first body 12 such that the liquid flow through the fluid supply conduit 42 is restricted or closed.

The first body 12 can be integrated into the reusable power supply section 6. The liquid store 8 may be configured as a consumable 70 comprising a mouthpiece portion 5 and housing the vaporizing unit 11.

The fluid transfer element 15 can be housed within the first body 12. When the valve 10 is in an open position, the fluid supply to the fluid transfer element 15 is opened. The heating element 13 can be located in a center portion of the first body 12 and encircled by the fluid transfer element 15. The fluid transfer element 15 may have a tubular shape and be configured to house the heating element 13 in the hollow space defined therein.

The liquid store 8 can be provided with a pierceable membrane 165 and an end portion of the fluid supply conduit 42 can be provided with a sharp tip 166 configured to pierce the membrane 165. The membrane 165 and the tip 166 can be arranged (i.e. sunken down) such that the tip 166 does not protrude above the engagement surface 160.

Within the scope of the present invention, the fluid transfer element 15 and the compressible fluid conduit 42 perform the same function, i.e. to transfer vaporizing liquid to a heating element 13. The idea of compressing a fluid transfer element 15 or a fluid conduit 42 such that the flow of vaporizing liquid can be controlled encompasses all the embodiments illustrated in figures 3, 6a, 6b, 8a-8d and 11.

As previously described in connection with the illustrated embodiments, the fluid transfer element 15 can be in the form of a wick, which can be a compressible and fibrous material as seen in figures 8a-8d and 13. However, the wick can also be provided with an extension in the form of a compressible fluid conduit 42 as illustrated in figures 3, 6a, 6 and 11. Hence, the fluid transfer element 16 can be in the form of a wick or in the form of a compressible fluid conduit 42 and should be interpreted interchangeably in the claims.

The skilled person will realize that the present invention by no means is limited to the described exemplary embodiments. The mere fact that certain measures are recited in mutually different dependent claims does not indicate that a combination of these measures cannot be used to advantage. Moreover, the expression "comprising" does not exclude other elements or steps. Other non-limiting expressions include that "a" or "an" does not exclude a plurality and that a single unit may fulfill the functions of several means. Any reference signs in the claims should not be construed as limiting the scope. Finally, while the invention has been illustrated in detail in the drawings and in the foregoing description, such illustration and description is considered to be illustrative or exemplary and not restrictive; the invention is not limited to the disclosed embodiments.

The following numbered clauses are included as part of the present disclosure.
Clause 1: A valve for an electronic cigarette, the valve comprising a first body , a second body and a biasing member configured to apply a biasing force between the first body and the second body,
   the first body and the second body being rotatably connected to each other about a rotation axis such that the valve can be operated in an open position and a closed position based on the angular position of the first body in relation to the second body,
   wherein the valve further comprises a variable length actuator comprising a shape memory alloy configured to change its length under the influence of heat, which is configured to apply an actuator force which acts counter to the biasing force, wherein the actuator force is applied at a radial distance from the rotation axis, and wherein the valve is changed from closed to open when the actuator force exceeds the biasing force.
Clause 2. The valve according to clause 1, wherein the variable length actuator has a first portion connected to the first body and a second portion connected to the second body.
Clause 3. The valve according to clause 1 or 2, wherein the variable length actuator is a wire.
Clause 4. The valve according to any of the preceding clauses, wherein the valve has a cylindrical outer surface, and wherein the variable length actuator is at least partially encircling the outer surface of the valve.
Clause 5. The valve according to any of the preceding clauses, wherein the valve body has a groove or a channel configured to accommodate the variable length actuator.
Clause 6. The valve according to clause 5, when dependent on clause 4, wherein the groove is located outer periphery on the cylindrical outer surface.
Clause 7. The valve according to any one of the preceding clauses, wherein the radial distance at which the actuator force is applied substantially corresponds to the radius of the valve.
Clause 8. The valve according to any one of the preceding clauses, wherein the biasing member is configured to bias the valve towards the closed position.
Clause 9. The valve according to any of the preceding clauses, wherein the first body comprises a first closing surface and the second body comprises a second closing surface, wherein the variable length actuator is configured to change a distance between the first closing surface and the second closing surface.
Clause 10. A fluid supply system for an electronic cigarette comprising the valve according to any one of the preceding clauses, and wherein the fluid supply system further comprises a fluid supply conduit configured to transport fluid from a liquid store,
   wherein the valve is configured to compress the fluid supply conduit in response to the relative angular position between the first valve body and the second valve body, such that the flow rate of liquid from the liquid store can be regulated.
Clause 11. A consumable for an electronic cigarette, the consumable comprising:
   a vaporizing unit,
   a liquid store, and
   a valve member in the form of a first body which is moveable relative to a second body between a first position and a second position, such that when the first body is in the first position the first body is sealed against the second body such that the liquid flow from the liquid store to the vaporizing unit is closed and when the moveable member is in the second position the liquid flow from the liquid store to the vaporizing unit is opened,
   wherein the first body is operably connected to a biasing member and an actuator, wherein the biasing member is configured to apply a biasing force to bias the first member towards one of the first and the second positions and the actuator is configured to apply an actuator force which acts counter to the biasing force, whereby the first member is movable from the first position towards the second position when the actuator force exceeds the biasing force.
Clause 12. The consumable according to clause 11, wherein the first body is configured as a cylindrical member configured to be rotated around an axis and is located within the liquid store.
Clause 13. The consumable according to clause 11 or clause 12, wherein the first body is removably connected to a rotor and wherein the rotor is operatively connected to the actuator and the biasing member.
Clause 14. The consumable according to clause 13, wherein the rotor and the first body comprise corresponding engagement structures.
Clause 15. The consumable according to clause 13 or clause 14, wherein the consumable can only be connected and disconnected from the rotor when the valve is in the closed position.
Clause 16. The consumable according to any of clauses 11 to 15, wherein the first body comprises at least one liquid channel having a liquid inlet and wherein the second body comprises at least one liquid channel from the liquid store to an outlet, and wherein the valve is closed when the liquid inlet of the first body is misaligned with the outlet in the second body.

## Claims

1. A consumable for an electronic cigarette, the consumable comprising:
a vaporizing unit,
a liquid store, and
a valve member in the form of a first body which is moveable relative to a second body between a first position and a second position, such that when the first body is in the first position the first body is sealed against the second body such that the liquid flow from the liquid store to the vaporizing unit is closed and when the moveable member is in the second position the liquid flow from the liquid store to the vaporizing unit is opened,
wherein the first body is operably connected to a biasing member and an actuator, wherein the biasing member is configured to apply a biasing force to bias the first member towards one of the first and the second positions and the actuator is configured to apply an actuator force which acts counter to the biasing force, whereby the first member is movable from the first position towards the second position when the actuator force exceeds the biasing force.

2. The consumable according to claim 1, wherein the first body is configured as a cylindrical member configured to be rotated around an axis and is located within the liquid store.

3. The consumable according to claim 1 or claim 2, wherein the first body is removably connected to a rotor and wherein the rotor is operatively connected to the actuator and the biasing member.

4. The consumable according to claim 3, wherein the rotor and the first body comprise corresponding engagement structures.

5. The consumable according to claim 3 or claim 4, wherein the consumable can only be connected and disconnected from the rotor when the valve is in the closed position.

6. The consumable according to any of the preceding claims, wherein the first body comprises at least one liquid channel having a liquid inlet and wherein the second body comprises at least one liquid channel from the liquid store to an outlet, and wherein the valve is closed when the liquid inlet of the first body is misaligned with the outlet in the second body.
